# EUROPÄISCHE PATENTSCHRIFT

(11) **EP 1 268 355 B1**
(45) Veröffentlichungstag und Bekanntmachung des Hinweises auf die Patenterteilung: **15.11.2006**
(21) Anmeldenummer: 01915020.0
(22) Anmeldetag: 20.02.2001
(51) Int. Cl.: C03C 10/02, C03C 10/04, C03C 10/06, H01T 13/34, C03C 14/00

(54) **GLASKERAMIK, VERFAHREN ZU DEREN HERSTELLUNG UND ZÜNDKERZE MIT EINER DERARTIGEN GLASKERAMIK**
GLASS CERAMIC MATERIAL, METHOD FOR PRODUCING THE SAME AND SPARK PLUG CONTAINING SUCH A GLASS CERAMIC MATERIAL
VITROCERAMIQUE, SON PROCEDE DE PRODUCTION ET BOUGIE D'ALLUMAGE COMPORTANT UNE TELLE VITROCERAMIQUE

(30) Priorität: 01.04.2000 DE 10016416
(43) Veröffentlichungstag der Anmeldung: 02.01.2003
(73) Patentinhaber: ROBERT BOSCH GMBH, 70442 Stuttgart (DE)
(72) Erfinder: GEIER, Heinz, 71229 Leonberg (DE); POLLNER, Rudolf, 96049 Bamberg (DE); KOENGETER, Imke, 70199 Stuttgart (DE); EISELE, Ulrich, 70199 Stuttgart (DE)
(86) Internationale Anmeldenummer: PCT/DE2001/000648
(87) Internationale Veröffentlichungsnummer: WO 2001/074731

(56) Entgegenhaltungen:
- DE-A- 2 245 403
- DE-A- 19 708 105
- DUAN R -G ET AL: "Effect of Changing TiO2 Content on Structure and Crystallization of CaO-Al2O3-SiO2 System Glasses" JOURNAL OF THE EUROPEAN CERAMIC SOCIETY,GB,ELSEVIER SCIENCE PUBLISHERS, BARKING, ESSEX, Bd. 18, Nr. 12, 1. November 1998 (1998-11-01), Seiten 1729-1735, XP004134531 ISSN: 0955-2219
- VILLEGAS M A ET AL: "PROPIEDADES Y CARACTERIZACION ESTRUCTURAL DE VIDRIOS DEL SISTEMA CAO-TIO2-AL2O3-SIO2" BOLETIN DE LA SOCIEDAD ESPANOLA DE CERAMICA Y VIDRIO,ES,SOCIEDAD ESPANOLA DE CERAMICA Y VIDRIO, MADRID, Bd. 34, Nr. 3, 1995, Seiten 135-139, XP002068948 ISSN: 0366-3175

## Beschreibung

Die Erfindung betrifft eine Glaskeramik, insbesondere zur Verwendung als Widerstand oder gasdichtes Keramiklot in einer Zündkerze, ein Verfahren zu deren Herstellung sowie eine Zündkerze mit einer derartigen Glaskeramik nach der Gattung der unabhängigen Ansprüche.

### Stand der Technik

Aus der Anmeldung DE 196 51 454.1 ist eine Zündkerze bekannt, bei der ein Anschlussbolzen mit einer Mittelelektrode über einen zwischen der Elektrode und dem Anschlussbolzen angeordneten Widerstand in Form einer Glaseinschmelzung in Verbindung steht. Darüber hinaus ist daraus bereits bekannt, diese Widerstandseinschmelzung aus Glas- oder einem Glaskeramikmaterial auszuführen, das zur Erhöhung der elektrischen Leitfähigkeit mit einer netzwerkartig ausgebildeten Metallphase versehen werden kann. Diese Metallphase wird dort durch eine stromlos abgeschiedene Oberflächenmetallisierung von Glaspulver erreicht, das anschließend in der Zündkerze zu einem Widerstand eingeschmolzen wird.

Aus der DE 197 08 105 A ist eine Glaskeramik bekannt, die aus den Oxiden der Elemente Ca, Si, Ti und Al besteht. Eine Glaskeramik mit ähnlicher Zusammensetzung ist aus Duan R-G et al., "Effect of Changing TiO₂ Content on Structure and Crystallization of CaO-Al₂O₃-SiO₂ System Glasses", Journal of the European Ceramic Soxiety, GB, Elsevier Science Publishers, Barking, Essex, Bd. 18, Nr. 12, 1. November 1998, Seiten 1729-1735, bekannt. Weiterhin ist aus der DE 22 45 403 A bekannt, ähnliche Glaskeramiken in Zündkerzen zu verwenden.

Weiter ist aus der Anmeldung DE 196 23 989.3 eine Zündkerze bekannt, bei der der Anschlussbolzen mit der Mittelelektrode über einen Abbrandwiderstand in Verbindung steht. Dort ist zudem vorgesehen, zwischen dem Abbrandwiderstand und der Mittelelektrode einen Kontaktstift anzuordnen.

### Vorteile der Erfindung

Die erfindungsgemäße Glaskeramik hat gegenüber dem Stand der Technik den Vorteil, dass sie sich je nach Zusammensetzung sowohl als hochohmige als auch als niederohmige glaskeramische Einschmelzung in einer Zündkerze eignet. Dabei ist sie vorteilhaft bis über 1000°C temperaturstabil, so dass sie in Zündkerzen insbesondere als weit vorgezogener Abbrandwiderstand eingesetzt werden kann. Insgesamt eignet sich die erfindungsgemäße Glaskeramik somit auch zum Einsatz in neuartigen Zündkerzen mit Platin-Mittelelektrode, die im Bereich des Isolatorfußes bei Betrieb bis zu 950°C heiß werden. Insbesondere erträgt sie eine Betriebstemperatur von 900°C über mehr als 2000 h.

Die erfindungsgemäße Glaskeramik hat weiter den Vorteil, dass sie bei einer Prozesstemperatur von weniger als 950°C, insbesondere zwischen 850°C und 950°C, aus einem Glaspulver bzw. einer Glaspulvermischung eingeschmolzen werden kann, wobei der Einsatz von Schutzgas nicht erforderlich ist. Sie ist zudem hochspannungsfest bis 20 kV/mm bei Raumtemperatur bzw. bis 10 kV/mm bei 800°C, wobei gleichzeitig ihr Wärmeausdehnungskoeffizient an das im Fall von Zündkerzen typischerweise eingesetzte Isolatormaterial Aluminiumoxid (Al₂O₃) angepasst ist. Konkret beträgt der Wärmeausdehnungskoeffizient typischerweise ca. 6 ppm/K bei 100°C bis 200°C und ca. 9 ppm/K bei 700°C bis 800°C. Auf Grund dieser Eigenschaften eignet sich die erfindungsgemäße Glaskeramik daher besonders zum Herstellen einer glaskeramischen Einschmelzung als Abbrandwiderstand in einer Zündkerze mit einem benachbarten Isolator aus dichtem, reinem, kristallinem Aluminiumoxid.

Die hohe Temperaturstabilität und Hochspannungsfestigkeit wird im Übrigen dadurch erzielt, dass die erfindungsgemäße Glaskeramik zumindest teilweise bzw. zumindest bereichsweise refraktäre Phasen, insbesondere die Phasen Anorthit, Wollastonit und Titanit, aufweist.

Weiter ist vorteilhaft, dass durch ein gezieltes Aufbereiten des Ausgangsglases zu einem Ausgangsmaterial erfindungsgemäß auch eine Glaskeramik in Form eines elektrisch leitfähigen Glaskeramiklotes herstellbar ist, das beispielsweise zur Kontaktierung einer Widerstandseinschmelzung aus einer davon verschieden zusammengesetzten Glaskeramik mit einem Metall, beispielsweise einem Kontaktstift, einem Bolzen oder einer Mittelelektrode in einer Zündkerze eingesetzt wird.

Insbesondere erlaubt es die erfindungsgemäße Glaskeramik durch Variation ihrer Zusammensetzung somit vorteilhaft eine temperaturstabile und gasdichte Kontaktierung der Mittelelektrode bzw. des Bolzens in einer Zündkerze zu gewährleisten.

Vorteilhafte Weiterbildungen der Erfindung ergeben sich aus den in den Unteransprüchen genannten Maßnahmen.

So ist es besonders vorteilhaft hinsichtlich Hochspannungsfestigkeit, Temperaturstabilität und Anpassung des Wärmeausdehnungskoeffizienten an den umgebenen Isolator aus Aluminiumoxid, wenn die Glaskeramik eine Zusammensetzung gemäß Anspruch 4 aufweist.

Eine ganz besonders vorteilhafte Ausführung der Glaskeramik hinsichtlich der Ausbildung von refraktären Phasen durch eine gezielte Temperaturbehandlung des Ausgangsglases ergibt sich dann, wenn das zur Herstellung der Glaskeramik eingesetzte Ausgangsglas gemäß Anspruch 5 zusammengesetzt ist.

Um die elektrischen Eigenschaften der herzustellenden Glaskeramik einzustellen, bestehen vorteilhaft zwei unterschiedliche, alternativ einsetzbare Möglichkeiten: Einerseits die Ausbildung einer in die Glaskeramik eingebetteten, insbesondere netzwerkartig ausgebildeten Metallphase oder andererseits die Ausbildung einer in die Glaskeramik eingebetteten, insbesondere netzwerkartig ausgebildeten Kohlenstoffphase. Die Kohlenstoffphase besteht dabei vorteilhaft aus pyrolisiertem Kohlenstoff.

Zur Herstellung einer Glaskeramik den gewünschten kristallinen Phasen ist weiter vorteilhaft, wenn die Einschmelztemperatur des eingesetzten Ausgangsmaterials zwischen 850°C und 950°C liegt. Dort wird das aufgeheizte Ausgangsmaterial dann zur Kristallisation über eine erste Zeitdauer von bevorzugt 5 min bis 15 min gehalten, wobei die erläuterten refraktären Phasen entstehen und das Ausgangsmaterial sich zu einer Glaskeramik umwandelt. Unter einer Glaskeramik wird in diesem Zusammenhang ein Material verstanden, das gegenüber einem Glas zumindest bereichsweise kristalline Phasen aufweist.

Zur Erzeugung einer niederohmigen Glaskeramik, insbesondere zur Verwendung als Glaskeramiklot, kann das im Laufe des erfindungsgemäßen Verfahrens eingesetzte Glaspulver vorteilhaft einerseits mit einer Metallisierung aus einem hochtemperaturbeständigen Metall, oder andererseits alternativ mit einem Panat aus einem Glaspulver, einem Binder und einem Rußpulver versehen sein.

### Zeichnungen

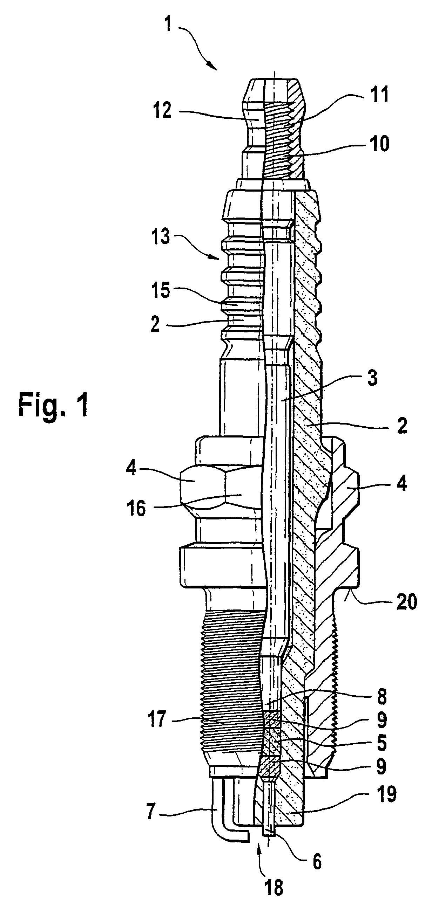

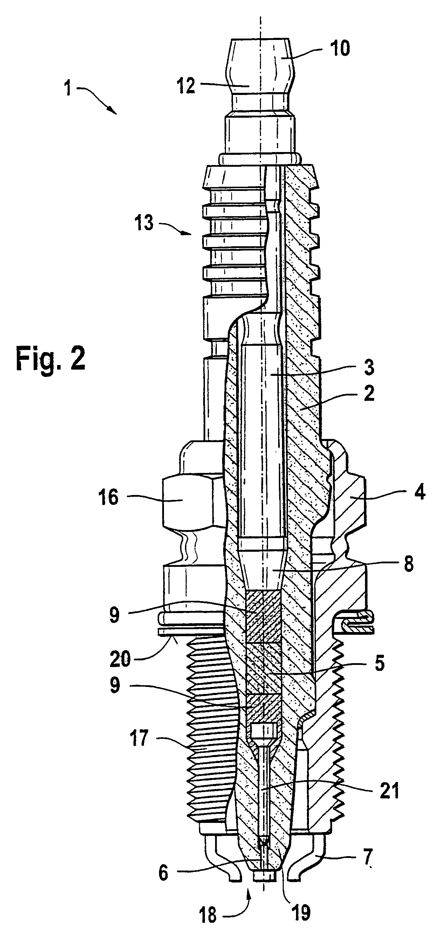

Die Erfindung wird anhand der Zeichnungen und in der nachfolgenden Beschreibung näher erläutert. Die Figur 1 zeigt als erstes Ausführungsbeispiel einen Schnitt einer Zündkerze mit einer glaskeramischen Einschmelzung als Abbrandwiderstand. Die Figur 2 zeigt ein zu Figur 1 alternatives Ausführungsbeispiel.

### Ausführungsbeispiele

Zunächst wird zur Realisierung einer glaskeramischen Einschmelzung als Abbrandwiderstand bzw. als Keramiklot in einer Zündkerze 1 in an sich bekannter Weise aus einer Ausgangsmischung ein Ausgangsglas erschmolzen. Die Ausgangsmischung besteht dabei aus 38 bis 48 Gew.% SiO₂, 15 bis 19 Gew.% Al₂O₃, 4,5 bis 11 Gew.% TiO₂, 0 bis 1,5 Gew.% % Na₂O, 0 bis 1,5 Gew.% K₂O und 23 bis 30 Gew.% CaO. Darüber hinaus kann der Ausgangsmischung Li₂O in einem Anteil von bis zu 1,5 Gew.% zugesetzt sein.

Bevorzugt besteht die Ausgangsmischung aus 43 bis 48 Gew.% SiO₂, 16, 5 bis 18 Gew.% Al₂O₃, 6 bis 10,5 Gew.% TiO₂, 0,3 bis 1,2 Gew.% Na₂O, 0,3 bis 1,2 Gew.% K₂O und 24,5 bis 28,5 Gew.% CaO. Die besten Ergebnisse erhält man mit einer Ausgangsmischung, die aus 45 Gew.% SiO₂, 17 Gew.% Al₂O₃, 9 Gew.% TiO₂, 0,5 Gew.% Na₂O, 0,5 Gew.% K₂O und 28 Gew.% CaO besteht.

Zur Herstellung eines Abbrandwiderstandes in Form einer glaskeramischen Widerstandseinschmelzung, die mit benachbarten metallischen Bauteilen der Zündkerze über ein Glaskeramiklot verbunden ist, wird die vorstehend erläuterte Ausgangsmischung zunächst zu einem Ausgangsglas erschmolzen, das danach in zwei Chargen aufgespalten wird. Anschließend wird die erste Charge dieses Ausgangsglases dann zu einem Glaspulver ermahlen, das eine mittlere Teilchengröße von 150 µm bis 250 µm aufweist.

Das derart vorbereitete Glaspulver wird im Folgenden als eigentliche hochohmige Widerstandseinschmelzung in Form eines Abbrandwiderstandes in einer Zündkerze eingesetzt.

Die zweite Charge des Ausgangsglases dient im Weiteren zur Herstellung eines Glaskeramiklotes zur Verbindung dieses Abbrandwiderstandes mit benachbarten Metallteilen in der Zündkerze.

Zur Herstellung dieses Glaskeramiklotes in Form einer niederohmigen Glaskeramik bestehen zwei alternative Möglichkeiten zur Herstellung:

Die erste Ausführungsform sieht vor, dass das Ausgangsglas zunächst zu einem Glaspulver mit einer mittleren Teilchengröße von weniger als 250 µm zermahlen und anschließend in der aus DE 196 51 454.1 bekannten Weise durch stromloses Metallisieren mit einer Oberflächenmetallisierung versehen wird. Diese Oberflächenmetallisierung ist eine Metallisierung mit einem hochtemperaturbeständigen Metall wie Platin, Palladium, Nickel, Wolfram oder einer Legierung aus diesen Metallen. Bevorzugt wird Palladium eingesetzt. Die Dicke der Oberflächenmetallisierung beträgt üblicherweise zwischen 0,5 nm bis 10 nm, insbesondere zwischen 2 nm und 5 nm.

Alternativ zu der erläuterten Oberflächenmetallisierung des aus dem Ausgangsglas ermahlenen Glaspulvers kann dieses in einem ersten Verfahrensschritt jedoch zunächst auch zu einem Ausgangsmaterial aufbereitet werden. Dazu wird ein erster Teil des Ausgangsglases zu einem ersten Glaspulver mit einer mittleren Teilchengröße von 150 µm bis 250 µm ermahlen, und ein zweiter Teil des Ausgangsglases zu einem zweiten Glaspulver mit einer mittleren Teilchengröße von unter 100 µm, insbesondere von 5 µm bis 70 µm, ermahlen. Diese beiden Glaspulver mit unterschiedlicher Teilchengröße werden danach mit einem Rußpulver und einem organischen Binder vermischt. Das Rußpulver weist dabei eine mittlere Teilchengröße von 200 nm bis 2 µm, insbesondere von 400 nm bis 600 nm, auf. Der organische Binder ist eine Mischung aus Carboxymethylcellulose und Dextrin, wobei Wasser als Lösungsmittel eingesetzt wird. Weiter wird dem Ausgangsmaterial in bevorzugter Ausgestaltung zusätzlich Zirkoniumdioxid-Pulver und Mullit-Pulver jeweils mit einer mittleren Teilchengröße von unter 100 µm zugesetzt.

Im Einzelnen wird das Ausgangsglas in dem ersten Verfahrensschritt zu einem Ausgangsmaterial mit einem Anteil von 40 Gewichtsprozent bis 58 Gewichtsprozent des ersten Glaspulvers, einem Anteil von 3 Gewichtsprozent bis 13 Gewichtsprozent des zweiten Glaspulvers, einem Anteil von 0,9 Gewichtsprozent bis 2,5 Gewichtsprozent des Rußpulvers, einem Anteil von 10 Gewichtsprozent bis 37 Gewichtsprozent des Zirkoniumdioxid-Pulvers, einem Anteil von 8 Gewichtsprozent bis 13 Gewichtsprozent des Mullit-Pulvers und einem Anteil von 0,6 Gewichtsprozent bis 4 Gewichtsprozent des organischen Binders aufbereitet. Die vorstehenden Angaben in Gewichtsprozent sind dabei auf das lösungsmittelfreie Ausgangsmaterial zu beziehen, dem im Weiteren dann das Lösungsmittel, im erläuterten Beispiel Wasser, zugesetzt wird. Der Anteil des Lösungsmittels in dem Ausgangsmaterial beträgt 12 bis 40 Volumenprozent, insbesondere 22 bis 37 Volumenprozent.

Nachdem nun einerseits das Ausgangsglas in Form eines Glaspulvers vorbereitet ist und andererseits ein oberflächenmetallisiertes Glaspulver oder alternativ ein aufbereitetes Ausgangsmaterial aus einer Glaspulvermischung vorbereitet ist, werden diese Materialien nun bei der Herstellung einer Zündkerze 1 eingesetzt. Dies wird mit Hilfe der Figur 1 erläutert.

Die Figur 1 zeigt eine prinzipiell aus DE 196 51 454.1 bekannte Zündkerze 1 mit einem Isolator 2 aus beispielsweise reinem, kristallinen und gasdichten Aluminiumoxid, einem metallischen Anschlussbolzen 3, einem Gehäuse 4, einem Widerstand 5 in Form einer glaskeramischen Widerstandseinschmelzung, einer Mittelelektrode 6, die beispielsweise aus Platin besteht oder mit Platin beschichtet ist, und einer Massenelektrode 7. Der Anschlussbolzen 3 weist weiter ein unteres Ende 8 auf.

Zwischen dem unteren Ende 8 des Anschlussbolzens 3 und dem Widerstand 5 ist weiter ein gasdichtes Glaskeramiklot 9 vorgesehen, das den Widerstand 5 und den Anschlussbolzen 3 gasdicht miteinander verbindet. Darüber hinaus ist auch zwischen der Mittelelektrode 6 und dem Widerstand 5 ein gasdichtes Glaskeramiklot 9 vorgesehen, das den Widerstand 5 gasdicht mit der Mittelelektrode 6 verbindet.

Die Zündkerze 1 weist weiter ein oberes Ende 10, ein Gewinde 11 und eine Anschlussmutter 12 zum Anschluss einer Zündleitung auf. Darüber hinaus ist eine Kriechstrombarriere 13 und eine Mehrkantanordnung 16 vorgesehen, mit deren Hilfe die Zündkerze 1 in einem Motorblock eingeschraubt werden kann. Dazu ist ein Gewinde 17 vorgesehen. Die Mittelektrode 6 und die Massenelektrode 7 sind weiter voneinander über einen Abstand 18 getrennt. Schließlich ist in Figur 1 vorgesehen, dass der Isolator 2 weit vorgezogen ist und die Mittelelektrode 6 bereichsweise von der Massenelektrode 7 abschirmt. Dazu weist der Isolator 2 eine Isolatorfußspitze 19 auf, so dass sich eine Funkenstrecke lediglich zwischen der Spitze der Mittelelektrode 6 und der Massenelektrode 7 aufbauen kann. Die Zündkerze 1 besitzt weiter eine Stirnfläche 20, die das Einschrauben der Zündkerze 1 in einen Motorblock begrenzt.

Zur Herstellung der Zündkerze gemäß Figur 1 wird nun zunächst der Isolator 2 in bekannter Weise mit der Mittelelektrode 6 versehen. Danach wird entweder das mit einer Oberflächenmetallisierung versehene Glaspulver als Glaskeramiklot 9 oder das aufbereitete Ausgangsmaterial aus der Glaspulvermischung, dem Ruß, dem organischen Binder und gegebenenfalls weiteren Bestandteilen in den in dem Isolator 2 vorliegenden Hohlraum eingefüllt. Anschließend wird zur Herstellung des hochohmigen Widerstandes 5 dann das zu einem Glaspulver zermahlene Ausgangsglas in den Isolator 3 eingefüllt. Schließlich wird auf dieses zermahlene Ausgangsglas erneut entweder das oberflächenmetallisierte Glaspulver oder das in der erläuterten Weise aufbereitete Ausgangsmaterial eingefüllt. Schließlich wird auf diese Schichtfolge der Anschlussbolzen 3 aufgesetzt.

Nun folgt der zweite Verfahrensschritt zur Herstellung einer Glaskeramik wobei die eingefüllten unterschiedlichen Materialien zur Ausbildung des Widerstandes 5 bzw. des gasdichten Glaskeramiklotes 9 gemeinsam mit der Zündkerze und dem eingesetzten Bolzen 3 von einer Ausgangstemperatur, die unterhalb der Erweichungstemperatur T_{g} des Ausgangsglases liegt, über eine erste Zeitdauer auf eine Einschmelztemperatur aufgeheizt, die oberhalb der Erweichungstemperatur T_{g} des Ausgangsglases liegt. Dort wird die Zündkerze 1 dann über eine zweite Zeitdauer bei dieser Temperatur gehalten und schließlich wieder abgekühlt.

Die Ausgangstemperatur bei der erläuterten Wärmebehandlung liegt typischerweise zwischen 10°C und 40°C, insbesondere bei Raumtemperatur. Die Einschmelztemperatur beträgt 850°C bis 950°C. Die erste Zeitdauer während derer die Zündkerze gemeinsam mit den eingefüllten Ausgangsmaterialien aufgeheizt wird, liegt zwischen 5 und 15 Minuten, insbesondere zwischen 8 und 10 Minuten. Die zweite Zeitdauer während derer die Zündkerze dann auf der erreichten Einschmelztemperatur gehalten wird liegt zwischen 5 und 25 Minuten, insbesondere zwischen 9 und 15 Minuten. Im Laufe dieser Wärmebehandlung, d. h. während des Einschmelzvorgangs, tritt weiterhin in dem Ausgangsglas eine zumindest teilweise und/oder zumindest bereichsweise Kristallisation ein. Dabei bilden sich unter anderem die refraktären Phasen Anorthit (CaO·Al₂O₃·2SiO₂), Wollastonit (CaO·2SiO₂) und Titanit (CaO·TiO₂·SiO₂).

Insgesamt ist nach dieser Wärmebehandlung zwischen der Mittelelektrode 6 und dem Bolzen 3 eine Einschmelzung in Form einer Glaskeramik entstanden, die im Bereich des Widerstandes 5 einen typischen Widerstand von mehr als 1 kΩ aufweist und eine hochohmige Einschmelzung als Abbrandwiderstand bildet. Zudem sind zwei Bereiche mit einem gasdichten Glaskeramiklot 9 entstanden, die den Widerstand 5 mit der Mittelelektrode 6 und dem Bolzen 3 verbinden. Das gasdichte Glaskeramiklot 9 ist dabei, je nach gewählter Zusammensetzung, entweder eine Glaskeramik die zumindest bereichsweise eine darin eingebettete, insbesondere netzwerkartig ausgebildete Metallphase umfasst, die im Wesentlichen die elektrische Leitfähigkeit des Glaskeramiklotes trägt. Andererseits kann das Glaskeramiklot 9 aber auch in Form einer Glaskeramik mit einer zumindest bereichsweise darin eingebetteten, insbesondere netzwerkartig ausgebildeten Kohlenstoffphase sein. Diese Kohlenstoffphase ist dabei aus dem dem aufbereiteten Ausgangsmaterial zugesetzten organischen Binder und/oder Rußpulver durch Pyrolyse entstanden.

Die Transformationstemperatur T_{g} des Ausgangsglases beträgt im erläuterten Beispiel 753°C, sie kann je nach Zusammensetzung des Ausgangsglases aber auch zwischen 670°C und 780°C betragen. Der dilatometrische Erweichungspunkt E_{g} des hergestellten Ausgangsglases liegt im erläuterten Beispiel bei 786°C, dieser kann jedoch ebenfalls je nach Zusammensetzung des Ausgangsglases zwischen ca. 720°C und ca. 820°C schwanken. er Wärmeausdehnungskoofizient α des Ausgangsglases beträgt 8,3 x 10⁻⁶/K bei einer Temperatur von 100°C bis 500°C, kann jedoch ebenfalls im Rahmen der erläuterten Grenzen der Zusammensetzung zwischen 6,7 x 10⁶/K und 8,8 x 10⁶/K schwanken.

Die Figur 2 zeigt ein zu Figur 1 alternatives Ausführungsbeispiel der Zündkerze 1. Die Zündkerze gemäß Figur 2 ist dabei prinzipiell aus der Anmeldung DE 196 23 989.3 bekannt. Sie unterscheidet sich von der Zündkerze gemäß Figur 1 vor allem durch die Form der Massenelektrode 7 sowie der Mittelelektrode 6. Darüber hinaus ist im Fall der Zündkerze 1 gemäß Figur 2 vorgesehen, dass der Widerstand 5 gegenüber Figur 1 zurückgesetzt ist, wobei zwischen dem Widerstand 5 und der Mittelelektrode 6 zusätzlich ein Anschlussbolzen 21 vorgesehen ist. Die Herstellung der Zündkerze gemäß Figur 2 ist hinsichtlich der Ausführung des Widerstandes 5 sowie des gasdichten Glaskeramiklots 9 völlig analog zu Figur 1. Gemäß Figur 2 wird der Widerstand 5 auf seiner Unterseite jedoch nicht mit der Mittelelektrode 6 sondern durch das Glaskeramiklot 9 gasdicht mit dem Anschlussbolzen 21 verbunden.

## Patentansprüche

1. Glaskeramik, insbesondere zur Verwendung als Widerstand (5) oder als gasdichtes Glaskeramiklot (9) in einer Zündkerze (1), mit einem Ausgangsglas, das aus einer Ausgangsmischung erschmolzen ist, die SiO₂, Al₂O₃, TiO₂ und CaO enthält, wobei die Ausgangsmischung 38 Gew.% bis 48 Gew.% SiO₂, 15 Gew.% bis 19 Gew.% Al₂O₃, 4,5 Gew.% bis 10 Gew.% TiO₂, 0 Gew.% bis 1,5 Gew.% Na₂O, 0 Gew.% bis 1,5 Gew.% K₂O und 23 Gew.% bis 30 Gew.% CaO enthält, und wobei die Glaskeramik eine Einschmelzung des Ausgangsglases mit zumindest bereichsweise kristallinen Phasen ist, **dadurch gekennzeichnet, dass** der Ausgangsmischung Lithiumoxid in einem Anteil bis zu 1,5 Gew.% zugesetzt ist.

2. Glaskeramik nach Anspruch 1, **dadurch gekennzeichnet, dass** die Ausgangsmischung 43 Gew.% bis 48 Gew.% SiO₂, 16,5 Gew.% bis 18 Gew.% Al₂O₃, 6 Gew.% bis 10,5 Gew.% TiO₂, 0,3 Gew.% bis 1,2 Gew.% Na₂O, 0,3 Gew.% bis 1,2 Gew.% K₂O und 24,5 Gew.% bis 28,5 Gew.% CaO enthält.

3. Glaskeramik nach Anspruch 1, **dadurch gekennzeichnet, dass** die Ausgangsmischung aus 45 Gew.% SiO₂, 17 Gew.% Al₂O₃, 9 Gew.% TiO₂, 0,5 Gew.% Na₂O, 0,5 Gew.% K₂O und 28 Gew.% CaO besteht.

4. Glaskeramik nach mindestens einem der vorangehenden Ansprüche, **dadurch gekennzeichnet, dass** die Glaskeramik die refraktären Phasen Anorthit, Wollastonit und Titanit aufweist.

5. Glaskeramik mindestens einem der vorangehenden Ansprüche, **dadurch gekennzeichnet, dass** die Glaskeramik zumindest bereichsweise eine darin eingebettete, insbesondere netzwerkartig ausgebildete Metallphase umfaßt.

6. Glaskeramik nach mindestens einem der vorangehenden Ansprüche, **dadurch gekennzeichnet, dass** die Glaskeramik zumindest bereichsweise eine darin eingebettete, insbesondere netzwerkartig ausgebildete Kohlenstoffphase umfaßt.

7. Verfahren zur Herstellung einer Glaskeramik nach mindestens einem der vorangehenden Ansprüche, bei dem das Ausgangsglas in einem ersten Verfahrensschritt zunächst zu einem Ausgangsmaterial aufbereitet wird, dieses Ausgangsmaterial danach in einem zweiten Verfahrensschritt von einer Ausgangstemperatur, die unterhalb der Erweichungstemperatur (T_{g}) des Ausgangsglases liegt, über eine erste Zeitdauer auf eine Einschmelztemperatur aufgeheizt wird, die oberhalb der Erweichungstemperatur (T_{g}) des Ausgangsglases liegt, dort über eine zweite Zeitdauer gehalten und schließlich wieder abgekühlt wird, **dadurch gekennzeichnet, dass** das Aufbereiten des Ausgangsglases zu dem Ausgangsmaterial in dem ersten Verfahrensschritt ein Mahlen eines ersten Teiles des Ausgangsglases zu einem ersten Glaspulver mit einer mittleren Teilchengröße von 150 µm bis 250 µm und ein Mahlen eines zweiten Teiles des Ausgangsglases zu einem zweiten Glaspulver mit einer mittleren Teilchengröße von unter 100 µm, insbesondere von 5 µm bis 70 µm, sowie ein Vermischen dieser Glaspulver mit einem Rußpulver und einem organischen Binder umfaßt.

8. Verfahren nach Anspruch 7, **dadurch gekennzeichnet, dass** die Ausgangstemperatur zwischen 10°C und 40°C und die Einschmelztemperatur zwischen 850°C und 950°C liegt.

9. Verfahren nach Anspruch 7 oder 8, **dadurch gekennzeichnet, dass** die erste Zeitdauer zwischen 5 und 15 min, insbesondere zwischen 8 und 10 min, und dass die zweite Zeitdauer zwischen 5 und 25 min, insbesondere zwischen 9 und 15 min, liegt.

10. Verfahren nach Anspruch 7, **dadurch gekennzeichnet, dass** das Aufbereiten des Ausgangsglases in dem ersten Verfahrensschritt ein Mahlen zu einem Glaspulver, insbesondere mit einer mittleren Teilchengröße von weniger als 250 µm, umfaßt.

11. Verfahren nach Anspruch 10, **dadurch gekennzeichnet, dass** das Glaspulver in dem ersten Verfahrensschritt zumindest teilweise mit einer Oberflächenmetallisierung versehen wird.

12. Verfahren nach Anspruch 10 oder 11, **dadurch gekennzeichnet, dass** das Glaspulver mit einer Metallisierung mit einem hochtemperaturbeständigen Metall wie Platin, Palladium, Nickel, Wolfram oder deren Legierung versehen wird, die eine Dicke von 0,5 nm bis 10 nm aufweist.

13. Verfahren nach Anspruch 9, **dadurch gekennzeichnet, dass** das Rußpulver mit einer mittleren Teilchengröße von 200 nm bis 2 µm, insbesondere von 400 nm bis 600 nm, eingesetzt wird.

14. Verfahren nach Anspruch 9, **dadurch gekennzeichnet, dass** als organischer Binder eine Mischung aus Carboxymethylcellulose und Dextrin mit Wasser als Lösungsmittel eingesetzt wird.

15. Verfahren nach einem der Ansprüche 9, 13 oder 14, **dadurch gekennzeichnet, dass** bei der Aufbereitung des Ausgangspulvers zu dem Ausgangsmaterial Zirkoniumdioxid, insbesondere als Pulver mit einer mittleren Teilchengröße von unter 100 µm, zugesetzt wird.

16. Verfahren nach einem der Ansprüche 9 oder 13 bis 15, **dadurch gekennzeichnet, dass** bei der Aufbereitung des Ausgangspulvers zu dem Ausgangsmaterial Mullit zugesetzt wird.

17. Verfahren nach einem der Ansprüche 9 oder 13 bis 16, **dadurch gekennzeichnet, dass** das Ausgangsglas in dem ersten Verfahrensschritt zu einem Ausgangsmaterial mit einem Anteil von 40 Gew.% bis 58 Gew.% des ersten Glaspulvers, einem Anteil von 3 Gew.% bis 13 Gew.% des zweiten Glaspulvers, einem Anteil von 0,9 Gew.% bis 2,5 Gew.% Rußpulver, einem Anteil von 10 Gew.% bis 37 Gew.% Zirkoniumdioxid, einem Anteil von 8 Gew.% bis 13 Gew.% Mullit und einem Anteil von 0,6 Gew.% bis 4 Gew.% Binder aufbereitet wird, wobei die Angaben in Gew.% auf das lösungsmittelfreie Ausgangsmaterial bezogen sind.

18. Verfahren nach einem der Ansprüche 9 oder 13 bis 17, **dadurch gekennzeichnet, dass** das Lösungsmittel dem Ausgangsmaterial in einem Anteil von 12 bis 40 Vol.%, insbesondere von 22 Vol.% bis 37 Vol.%, zugesetzt wird.

19. Zündkerze mit einem Anschlußbolzen (3) und einer Mittelelektrode (6), die elektrisch über einen Widerstand (5) miteinander in Verbindung stehen, **dadurch gekennzeichnet, dass** der Widerstand (5) zumindest bereichsweise aus einer Glaskeramik nach mindestens einem der Ansprüche 1 bis 6 besteht.

20. Zündkerze nach Anspruch 19, **dadurch gekennzeichnet, dass** zwischen dem Widerstand (5) und der Mittelelektrode (6) ein Kontaktstift (21) angeordnet ist.

21. Zündkerze nach Anspruch 19, **dadurch gekennzeichnet, dass** der Widerstand (5) mit dem Anschlußbolzen (3) und/oder der Mittelelektrode (6) mit einem Glaskeramiklot aus einer Glaskeramik nach mindestens einem der Ansprüche 1 bis 6 verbunden ist.

22. Zündkerze nach Anspruch 20, **dadurch gekennzeichnet, dass** der Widerstand (5) mit dem Anschlußbolzen (3) und/oder dem Kontaktstift (21) mit einem Glaskeramiklot aus einer Glaskeramik nach mindestens einem der Ansprüche 1 bis 6 verbunden ist.

## Claims

1. Glass-ceramic, in particular for use as a resistor (5) or as a gastight glass-ceramic solder (9) in a spark plug (1), having a starting glass, which has been melted down from a starting mixture containing SiO₂, Al₂O₃, TiO₂ and CaO, the starting mixture containing 38% by weight to 48% by weight SiO₂, 15% by weight to 19% by weight Al₂O₃, 4.5% by weight to 10% by weight TiO₂, 0% by weight to 1.5% by weight Na₂O, 0% by weight to 1.5% by weight K₂O and 23% by weight to 30% by weight CaO, and the glass-ceramic being a fused form of the starting glass which has crystalline phases at least in regions, **characterized in that** lithium oxide is added to the starting mixture in a proportion of up to 1.5% by weight.

2. Glass-ceramic according to Claim 1, **characterized in that** the starting mixture contains 43% by weight to 48% by weight SiO₂, 16.5% by weight to 18% by weight Al₂O₃, 6% by weight to 10.5% by weight TiO₂, 0.3% by weight to 1.2% by weight Na₂O, 0.3% by weight to 1.2% by weight K₂O and 24.5% by weight to 28.5% by weight CaO.

3. Glass-ceramic according to Claim 1, **characterized in that** the starting mixture consists of 45% by weight SiO₂, 17% by weight Al₂O₃, 9% by weight TiO₂, 0.5% by weight Na₂O, 0.5% by weight K₂O and 28% by weight CaO.

4. Glass-ceramic according to at least one of the preceding claims, **characterized in that** the glass-ceramic includes the refractory phases anorthite, wollastonite and titanite.

5. Glass-ceramic according to at least one of the preceding claims, **characterized in that** at least in regions the glass-ceramic comprises an embedded metal phase, in particular in network-like form.

6. Glass-ceramic according to at least one of the preceding claims, **characterized in that** at least in regions the glass-ceramic comprises an embedded carbon phase, in particular in network-like form.

7. Process for producing a glass-ceramic according to at least one of the preceding claims, in which in a first process step the starting glass is first of all prepared to form a starting material, then this starting material in a second process step is heated over a first period of time from a starting temperature, which is below the softening point (Tg) of the starting glass, to a melting temperature, which is above the softening point (Tg) of the starting glass, is held at this melting temperature for a second period of time, and finally is cooled again, **characterized in that** the preparation of the starting glass to form the starting material in the first process step comprises milling a first part of the starting glass to form a first glass powder with a mean particle size of 150 µm to 250 µm and milling a second part of the starting glass to form a second glass powder with a mean particle size of less than 100 µm, in particular from 5 µm to 70 µm, and mixing these glass powders with a carbon black powder and an organic binder.

8. Process according to Claim 7, **characterized in that** the starting temperature is between 10°C and 40°C and the melting temperature is between 850°C and 950°C.

9. Process according to Claim 7 or 8, **characterized in that** the first period of time lasts between 5 and 15 min, in particular between 8 and 10 min, and **in that** the second period of time lasts between 5 and 25 min, in particular between 9 and 15 min.

10. Process according to Claim 7, **characterized in that** the preparation of the starting glass in the first process step comprises milling to form a glass powder, in particular with a mean particle size of less than 250 µm.

11. Process according to Claim 10, **characterized in that** in the first process step the glass powder is at least partially provided with a surface metallization.

12. Process according to Claim 10 or 11, **characterized in that** the glass powder is provided with a metallization comprising a metal which is able to withstand high temperatures, such as platinum, palladium, nickel, tungsten or an alloy thereof, this metallization being from 0.5 nm to 10 nm thick.

13. Process according to Claim 9, **characterized in that** the carbon black powder is used with a mean particle size of from 200 nm to 2 µm, in particular from 400 nm to 600 nm.

14. Process according to Claim 9, **characterized in that** the organic binder used is a mixture of carboxymethylcellulose and dextrin with water as solvent.

15. Process according to one of Claims 9, 13 or 14, **characterized in that** during the preparation of the starting powder to form the starting material zirconium dioxide, in particular in the form of a powder with a mean particle size of less than 100 µm, is added.

16. Process according to one of Claims 9 or 13 to 15, **characterized in that** mullite is added during the preparation of the starting powder to form the starting material.

17. Process according to one of Claims 9 or 13 to 16, **characterized in that** in the first process step the starting glass is prepared to form a starting material comprising from 40% by weight to 58% by weight of the first glass powder, from 3% by weight to 13% by weight of the second glass powder, from 0.9% by weight to 2.5% by weight of carbon black powder, from 10% by weight to 37% by weight of zirconium dioxide, from 8% by weight to 13% by weight of mullite and from 0.6% by weight to 4% by weight of binder, the details in % by weight being based on the solvent-free starting material.

18. Process according to one of Claims 9 or 13 to 17, **characterized in that** the solvent is added to the starting material in a proportion of from 12 to 40% by volume, in particular from 22% by volume to 37% by volume.

19. Spark plug having a connection bolt (3) and a centre electrode (6), which are electrically connected to one another via a resistor (5), **characterized in that** the resistor (5), at least in regions, consists of a glass-ceramic according to at least one of Claims 1 to 6.

20. Spark plug according to Claim 19, **characterized in that** a contact pin (21) is arranged between the resistor (5) and the centre electrode (6).

21. Spark plug according to Claim 19, **characterized in that** the resistor (5) is joined to the connection bolt (3) and/or the centre electrode (6) using a glass-ceramic solder made from a glass-ceramic according to at least one of Claims 1 to 6.

22. Spark plug according to Claim 20, **characterized in that** the resistor (5) is joined to the connection bolt (3) and/or the contact pin (21) using a glass-ceramic solder made from a glass-ceramic according to at least one of Claims 1 to 6.

## Revendications

1. Vitrocéramique, destinée en particulier à être utilisée en tant que résistance (5) ou en tant que joint vitrocéramique (9) étanche aux gaz dans une bougie d'allumage (1), comportant un verre de départ, obtenu par fusion à partir d'un mélange de départ qui contient du SiO₂, de l'Al₂O₃, du TiO₂ et du CaO, le mélange de départ contenant de 38 % en poids à 48 % en poids de SiO₂, de 15 % en poids à 19 % en poids d'Al₂O₃, de 4,5 % en poids à 10 % en poids de TiO₂, de 0 % en poids à 1,5 % en poids de Na₂O, de 0 % en poids à 1,5 % en poids de K₂O et de 23 % en poids à 30 % en poids de CaO, la vitrocéramique étant une masse fondue de verre de départ comportant, au moins par endroits, des phases cristallines,
**caractérisée en ce qu'**
on ajoute de l'oxyde de lithium au mélange de départ, dans une proportion pouvant atteindre jusqu'à 1,5 % en poids.

2. Vitrocéramique selon la revendication 1,
**caractérisée en ce que**
le mélange de départ contient de 43 % en poids à 48 % en poids de SiO₂, de 16,5 % en poids à 18 % en poids d'Al₂O₃, de 6 % en poids à 10,5 % en poids de TiO₂, de 0,3 % en poids à 1,2 % en poids de Na₂O, de 0,3 % en poids à 1,2 % en poids de K₂O et de 24,5 % en poids à 28,5 % en poids de CaO.

3. Vitrocéramique selon la revendication 1,
**caractérisée en ce que**
le mélange de départ est constitué de 45 % en poids de SiO₂, de 17 % en poids d'Al₂O₃, de 9 % en poids de TiO₂, de 0,5 % en poids de Na₂O, de 0,5 % en poids de K₂O et de 28 % en poids de CaO.

4. Vitrocéramique selon au moins l'une quelconque des revendications précédentes,
**caractérisée en ce qu'**
elle présente les phases réfractaires anorthite, wollastonite et titanite.

5. Vitrocéramique selon au moins l'une quelconque des revendications précédentes,
**caractérisée en ce qu'**
elle comporte, au moins par endroits, une phase métallique logée à l'intérieur, en particulier de type treillis.

6. Vitrocéramique selon au moins l'une quelconque des revendications précédentes,
**caractérisée en ce qu'**
elle comporte, au moins par endroits, une phase carbone logée à l'intérieur, en particulier de type treillis.

7. Procédé de fabrication d'une vitrocéramique selon au moins l'une quelconque des revendications précédentes, selon lequel on prépare le verre de départ, tout d'abord dans une première étape, en un matériau de départ, on chauffe ensuite dans une deuxième étape, ce matériau de départ d'une température de départ, inférieure à la température de ramollissement (Tg) du verre de départ, pendant un premier laps de temps, à une température de fusion supérieure à la température de ramollissement (Tg) du verre de départ, on le maintient à cette température pendant un deuxième laps de temps et enfin de nouveau on le refroidit,
**caractérisé en ce que**
la préparation du verre de départ en matériau de départ dans la première étape comporte un broyage d'une première partie du verre de départ en une première poudre de verre ayant une taille moyenne de particule de 150 µm à 250 µm, et un broyage d'une deuxième partie du verre de départ en une deuxième poudre de verre ayant une taille moyenne de particule inférieure à 100 µm, en particulier de 5 µm à 70 µm, ainsi qu'un mélange de ces poudres de verre avec une poudre de noir de carbone et un liant organique.

8. Procédé selon la revendication 7,
**caractérisé en ce que**
la température de départ est comprise entre 10°C et 40°C et la température de fusion entre 850°C et 950°C.

9. Procédé selon la revendication 7 ou 8,
**caractérisé en ce que**
le premier laps de temps est compris entre 5 et 15 minutes, en particulier entre 8 et 10 minutes et le deuxième laps de temps est compris entre 5 et 25 minutes, en particulier entre 9 et 15 minutes.

10. Procédé selon la revendication 7,
**caractérisé en ce que**
la préparation du verre de départ comporte, dans la première étape, un broyage en une poudre de verre ayant en particulier une taille moyenne de particule inférieure à 250 µm.

11. Procédé selon la revendication 10,
**caractérisé en ce que**
la poudre de verre est pourvue, dans la première étape, au moins en partie, d'une métallisation superficielle.

12. Procédé selon la revendication 10 ou 11,
**caractérisé en ce que**
la poudre de verre est pourvue d'une métallisation avec un métal résistant aux hautes températures comme le platine, le palladium, le nickel, le tungstène ou leur alliage, présentant une épaisseur de 0,5 à 10 nm.

13. Procédé selon la revendication 9,
**caractérisé en ce qu'**
on utilise de la poudre de noir de carbone ayant une taille moyenne de particule de 200 nm à 2 µm, en particulier de 400 nm à 600 nm.

14. Procédé selon la revendication 9,
**caractérisé en ce qu'**
on utilise, comme liant organique, un mélange de carboxyméthylcellulose et de dextrine, avec de l'eau en tant que solvant.

15. Procédé selon l'une quelconque des revendications 9, 13 ou 14,
**caractérisé en ce que**
lors de la préparation de la poudre de départ, on ajoute au matériau de départ, du dioxyde de zirconium en particulier en poudre ayant une taille moyenne de particule inférieure à 100 µm.

16. Procédé selon l'une quelconque des revendications 9 ou 13 à 15,
**caractérisé en ce que**
lors de la préparation de la poudre de départ, on ajoute de la mullite au matériau de départ.

17. Procédé selon l'une quelconque des revendications 9 ou 13 à 16,
**caractérisé en ce que**
le verre de départ est préparé, dans la première étape du procédé, en un matériau de départ avec une fraction de 40 % en poids à 58 % en poids de la première poudre de verre, une fraction de 3 % en poids à 13 % en poids de la deuxième poudre de verre, une fraction de 0,9 % en poids à 2,5 % en poids de poudre de noir de carbone, une fraction de 10 % en poids à 37 % en poids de dioxyde de zirconium, une fraction de 8 % en poids à 13 % en poids de mullite et une fraction de 0,6 % en poids à 4 % en poids de liant, les quantités en % en poids indiquées se rapportant au matériau de départ exempt de solvant.

18. Procédé selon l'une quelconque des revendications 9 ou 13 à 17,
**caractérisé en ce qu'**
on ajoute le solvant au matériau de départ dans une proportion de 12 à 40 % en volume, en particulier de 22 % en volume à 37 % en volume.

19. Bougie d'allumage comportant une tige de connexion (3) et une électrode centrale (6), reliées électriquement l'une à l'autre par une résistance (5),
**caractérisée en ce que**
la résistance (5) est constituée, au moins par endroits, d'une vitrocéramique selon au moins l'une quelconque des revendications 1 à 6.

20. Bougie d'allumage selon la revendication 19,
**caractérisée en ce qu'**
entre la résistance (5) et l'électrode centrale (6) il y a une tige de contact (21).

21. Bougie d'allumage selon la revendication 19,
**caractérisée en ce que**
la résistance (5) est reliée à la tige de connexion (3) et/ou à l'électrode centrale (6) par un joint constitué d'une vitrocéramique selon au moins l'une quelconque des revendications 1 à 6.

22. Bougie d'allumage selon la revendication 20,
**caractérisée en ce que**
la résistance (5) est reliée à la tige de connexion (3) et/ou à la tige de contact (21) par un joint constitué d'une vitrocéramique selon au moins l'une quelconque des revendications 1 à 6.
